# EUROPÄISCHE PATENTSCHRIFT

(11) **EP 2 849 990 B1**
(45) Veröffentlichungstag und Bekanntmachung des Hinweises auf die Patenterteilung: **06.04.2016**
(21) Anmeldenummer: 13720959.9
(22) Anmeldetag: 08.05.2013
(51) Int. Cl.: B60D 5/00, F16F 9/28, B62D 47/02

(54) **DREHGELENK MIT DREHWINKELMESSUNG**
SWIVEL JOINT WITH ROTATION ANGLE MEASUREMENT
ARTICULATION ROTATIVE AVEC MESURE D'ANGLE DE ROTATION

(30) Priorität: 15.05.2012 DE 102012104233; 31.08.2012 DE 202012103325 U; 12.10.2012 DE 202012103908 U
(43) Veröffentlichungstag der Anmeldung: 25.03.2015
(73) Patentinhaber: Hemscheidt Fahrwerktechnik GmbH & Co. KG, 42781 Haan-Gruiten (DE)
(72) Erfinder: RUNKEL, Walter, 53547 Leubsdorf (DE); PARIZEK, Markus, 40822 Mettmann (DE); KOBOW, Wolfgang, 42117 Wuppertal (DE)
(74) Vertreter: Patentanwälte Dr. Solf & Zapf
(86) Internationale Anmeldenummer: PCT/EP2013/059551
(87) Internationale Veröffentlichungsnummer: WO 2013/171104

(56) Entgegenhaltungen:
- WO-A1-85/03263
- DE-A1- 3 923 677
- DE-A1- 4 031 626
- US-A1- 2011 018 231

## Beschreibung

Die vorliegende Erfindung betrifft ein Drehgelenk, insbesondere zur gelenkigen Verbindung eines Vorderwagens und eines Hinterwagens eines Omnibusses, bestehend aus einem Gehäuse, das in einer zu einer Drehachse des Gelenkes senkrechten Ebene in zwei Gehäuseteile unterteilt ist, wobei die beiden Gehäuseteile gegeneinander um die Drehachse verdrehbar und abgedichtet gegen einen Austritt von in einem Gehäuseinnenraum befindlicher Hydraulikflüssigkeit miteinander verbunden sind, und wobei in dem ersten Gehäuseteil ein Zahnrad eines Zahnstangenantriebs eines Schwingungsdämpfers drehbar gelagert ist, und das zweite Gehäuseteil ein Antriebselement bildet und mit dem Zahnrad drehfest verbunden ist.

Ein derartiges Drehgelenk ist aus der DE 40 31 626 bekannt. Dieses Drehgelenk hat sich in der Praxis außerordentlich gut bewährt. Bei derartigen Drehgelenken besteht die Anforderung, in Abhängigkeit von der Knicklage des Vorderwagens zum Hinterwagens des Omnibusses, d. h. von der Drehstellung des Drehgelenks die Antriebskraft des Fahrzeuges zu steuern. Durch eine derartige Steuerung kann die Unfallgefahr wesentlich reduziert werden, da hierdurch Fehlreaktionen des Fahrzeugfahrers ausgeglichen werden können.

Der vorliegenden Erfindung liegt die Aufgabe zu Grunde, ausgehend von dem eingangs beschriebenen Drehgelenk dieses derart zu verbessern, dass es eine exakte Erfassung der Drehstellung und darüber hinaus eine Ausführung des Drehgelenks ermöglicht, so dass der Bauraum des Drehgelenks nicht vergrößert wird.

Erfindungsgemäß wird dies dadurch erreicht, dass koaxial zur Drehachse innerhalb des Gehäuses in einer Aufnahmekammer eine Drehwinkelmessvorrichtung angeordnet und mit dem zweiten Gehäuseteil zur Messung des Drehwinkels zusammenwirkt, und die Aufnahmekammer gegen einen Eintritt der Hydraulikflüssigkeit abgedichtet ist.

Durch die Anordnung der Drehwinkelmessvorrichtung koaxial zur Drehachse innerhalb des Gehäuses wird eine exakte Drehwinkelerfassung ermöglicht und gleichzeitig gewährleistet die erfindungsgemäße Anordnung, dass der von dem Gehäuse benötigte Bauraum nicht vergrößert wird. Diese Ausbildung ermöglicht auch eine Anordnung der erfindungsgemäßen Drehwinkelmessvorrichtung, ohne dass die Hydraulikflüssigkeit aus dem Drehgelenk austreten kann. Erfindungsgemäß ist es insbesondere vorteilhaft, wenn die Aufnahmekammer innerhalb der beiden Gehäuseteile angeordnet ist, so dass die Drehwinkelmessvorrichtung im Gehäuse vollständig integriert ist.

Weitere vorteilhafte Ausführungen sind in den Unteransprüchen enthalten.

Anhand der in den beiliegenden Zeichnungen dargestellten Ausführungsbeispiele soll die Erfindung im Folgenden genauer erläutert werden.

Es zeigen:
- Fig. 1: einen Querschnitt durch eine erste Ausführungsform einer erfindungsgemäßen Drehwinkelmessvorrichtung im eingebauten Zustand,
- Fig. 2: eine zweite Ausführungsform im Querschnitt einer erfindungsgemäßen Drehwinkelmessvorrichtung im eingebauten Zustand und
- Fig. 3 u. 4: weitere Ausführungsformen im Querschnitt einer erfindungsgemäßen Drehwinkelmessvorrichtung im eingebauten Zustand.

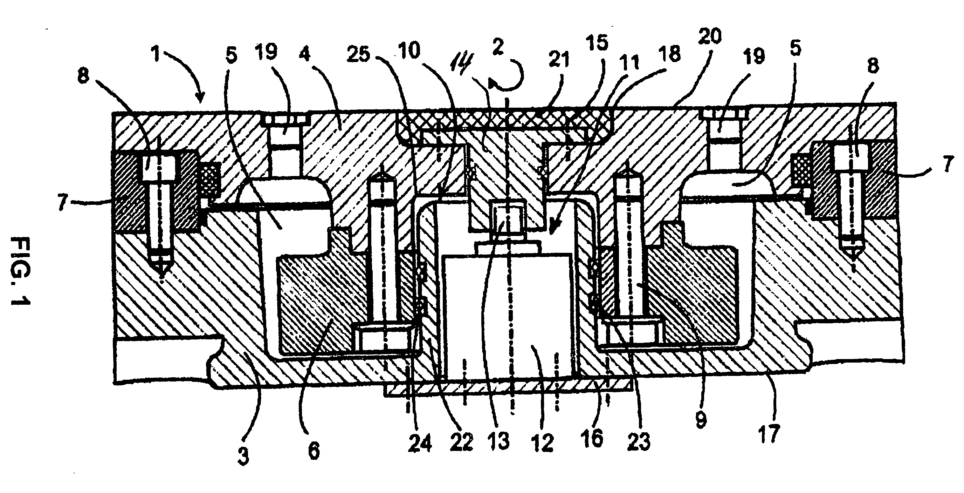

In den Fig. 1 bis 4 sind gleiche Teile bzw. funktionsgleiche Teile mit denselben Bezugszeichen gekennzeichnet. Sofern bestimmte beschriebene und/oder aus den Zeichnungen entnehmbare Merkmale der erfindungsgemäßen Drehwinkelmessvorrichtung oder ihrer Bestandteile nur im Zusammenhang mit einem Ausführungsbeispiel beschrieben sind, sind diese aber auch gemäß der Erfindung unabhängig von diesem Ausführungsbeispiel als Einzelmerkmal oder aber auch in Kombination mit anderen Merkmalen des Ausführungsbeispiels wesentlich und werden als zur Erfindung gehörig beansprucht.

Wie sich aus den beiliegenden Zeichnungen ergibt, ist ein erfindungsgemäßes Gehäuse 1 eines erfindungsgemäßen Drehgelenkes in einer zu seiner Drehachse 2 senkrechten Ebene in zwei Gehäuseteile 3, 4 unterteilt. Diese beiden Gehäuseteile 3, 4 sind gegeneinander um die Drehachse 2 verdrehbar sowie abgedichtet miteinander verbunden. Die Abdichtung ist derart, dass eine im Gehäuseinnenraum 5 befindliche Hydraulikflüssigkeit, insbesondere ein Hydrauliköl, nicht nach außen austreten kann. In dem ersten Gehäuseteil 3 ist ein Zahnrad 6 drehbar gelagert. Dieses Zahnrad 6 ist Teil eines Zahnstangenantriebs eines Schwingungsdämpfers. Hierzu wird, was die Ausgestaltung des Schwingungsdämpfers betrifft, im vollen Umfange auf die DE 40 31 626 verwiesen. Insoweit ist die darin beschriebene Ausgestaltung auch Gegenstand der vorliegenden Anmeldung. Das zweite Gehäuseteil 4 ist mit dem Zahnrad 6 drehfest verbunden und bildet ein Antriebselement, insbesondere einen Drehschemel des erfindungsgemäßen Drehgelenks. Durch Verdrehen bzw. Verschwenken des zweiten Gehäuseteils 4 gegenüber dem ersten Gehäuseteil 3 wird die Drehbewegung über das Zahnrad 6 auf den nicht näher beschriebenen Zahnradantrieb übertragen und der damit verbundene Schwingungsdämpfer betätigt. Zwischen dem ersten Gehäuseteil 3 und dem zweiten Gehäuseteil 4 ist ein Drehlager 7 angeordnet, das die drehbare Verbindung der beiden Gehäuseteile 3, 4 ermöglicht. Dieses Drehlager 7 ist mittels Befestigungsschrauben 8 am ersten Gehäuseteil 3 befestigt. Die Befestigung des Zahnrades 6 am zweiten Gehäuseteil 4 erfolgt über Befestigungsschrauben 9. Zur Befüllung des Gehäuseinnenraums 5 mit der Hydraulikflüssigkeit, insbesondere dem Hydrauliköl, sind im zweiten Gehäuseteil 4 Füllbohrungen vorhanden, die mittels Dichtstopfen 19 verschlossen sind.

Das Drehlager 7 kann als Wälzlager oder auch als Gleitlager ausgebildet sein, wobei das Drehlager 7 derart dimensioniert ist, dass es sowohl axiale als auch radiale Kräfte aufnehmen kann.

Wie weiterhin aus Fig. 1 erkennbar ist, ist koaxial zur Drehachse 2 innerhalb des Gehäuses 1 in einer Aufnahmekammer 10 eine Drehwinkelmessvorrichtung 11 angeordnet. Diese Drehwinkelmessvorrichtung 11 wirkt mit dem zweiten Gehäuseteil 4, dem Drehschemel zur Messung des Drehwinkels zwischen dem ersten Gehäuseteil 3 und dem zweiten Gehäuseteil 4 zusammen. Die Aufnahmekammer 10 ist gegen einen Eintritt von Hydraulikflüssigkeit, die sich im Gehäuseinnenraum 5 befindet, abgedichtet. Die Gehäusekammer 10 ist innerhalb der beiden Gehäuseteile 3, 4 angeordnet, so dass die Drehwinkelmessvorrichtung 11 im Gehäuse 1 vollständig integriert ist. Somit nimmt die erfindungsgemäße Drehwinkelmessvorrichtung 11 keinerlei zusätzlichen Bauraum ein. Im dargestellten Ausführungsbeispiel besteht die Drehwinkelmessvorrichtung 11 aus einem Drehpotentiometer 12, das mit seiner Drehwelle 13 über einen Mitnehmer 14 mit dem zweiten Gehäuseteil 4 verbunden ist. Der Mitnehmer 14 ist mit dem zweiten Gehäuseteil 4, dem Drehschemel, über Schrauben 15 verbunden. Werden diese Schrauben 15 gelöst, so kann der Mitnehmer 14 verdreht werden, so dass hierdurch ein Nullpunkt der erfindungsgemäßen Drehwinkelmessvorrichtung 11 eingestellt bzw. justiert werden kann. Die Drehwelle 13 ist vorzugsweise endseitig abgeflacht und ist in ein Langloch des Mitnehmers 14 eingesteckt. Bei einer Drehbewegung des zweiten Gehäuseteils 4 gegenüber dem ersten Gehäuseteil 3 wird somit die Drehwelle 13 durch den Mitnehmer 14 verdreht. Alternativ zu der gezeigten Ausbildung der erfindungsgemäßen Drehwinkelmessvorrichtung 11 kann diese aber auch als eine optische oder eine induktive Messvorrichtung ausgebildet sein.

Weiterhin ist aus Fig. 1 zu erkennen, dass die erfindungsgemäße Drehwinkelmessvorrichtung 11 auf einer Halteplatte 16 positioniert bzw. befestigt ist. Im dargestellten Ausführungsbeispiel ist das Drehpotentiometer 12 auf der Halteplatte 16 mittels Schrauben befestigt. Die Halteplatte 16 verschließt die Aufnahmekammer 10 nach außen, wobei die Halteplatte 16 auf einer Außenseite 17 des ersten Gehäuseteils 3 befestigt wird, beispielsweise angeschraubt wird. Der Mitnehmer 14 ist in einer zur Drehachse 2 koaxialen Durchgangsöffnung 18 des zweiten Gehäuseteils 4 dichtend angeordnet und über die Schrauben 15 mit dem zweiten Gehäuseteil 4 lösbar verbunden. Die Durchgangsöffnung 18 ist derart ausgebildet, dass der Mitnehmer 14 in ihr gegenüber einer Außenfläche 20 des zweiten Gehäuseteils 4 nach innen versetzt angeordnet ist, und die Durchgangsöffnung 18 ist oberhalb des Mitnehmers 14 durch eine Abdeckung 21 staubdicht verschlossen.

Zur Bildung der Aufnahmekammer 10 weist das erste Gehäuseteil 3 zweckmäßigerweise einen hohlzylindrischen Ansatz 22 auf, der koaxial zur Drehachse 2 ausgebildet ist und durch eine Innenbohrung 23 des Zahnrades 6 verläuft. Eine Abdichtung gegen das im Gehäuseinnenraum 5 befindliche Hydrauliköl bzw. die Hydraulikflüssigkeit aus dem Spalt zwischen dem hohlzylindrischen Ansatz 22 und der Innenbohrung 23 in die Aufnahmekammer 10 erfolgt durch Dichtungen 24, die auf der Wandung der Innenbohrung 23 des Zahnrades 6 abdichten. Vorzugsweise sind zwei übereinander angeordnete Dichtungen 24 vorgesehen. Zur Aufnahme des hohlzylindrischen Ansatzes 22 besitzt das zweite Gehäuseteil 4 eine konzentrisch bzw. koaxial angeordnete Ausnehmung 25 an seiner dem ersten Gehäuseteil 3 zugekehrten Innenseite. In diese Ausnehmung 25 ragt der hohlzylindrische Ansatz 22 endseitig hinein.

Durch die erfindungsgemäße Ausbildung ist die Drehwinkelmessvorrichtung 11 vor Verschmutzung geschützt. Wesentlich ist, dass die erfindungsgemäße Drehwinkelmessvorrichtung 11 im Drehzentrum des Drehgelenkes angeordnet ist. Hierbei kommt die erfindungsgemäße Drehwinkelmessvorrichtung 11 nicht mit der im Gehäuseinnenraum 5 befindlichen Gelenkfüllung aus Hydrauliköl in Berührung.

Da erfindungsgemäß die Drehwinkelmessvorrichtung 11 mit dem ersten Gehäuseteil 3 verbunden ist, wird gewährleistet, dass elektrische Anschlussleitungen für die erfindungsgemäße Drehwinkelmessvorrichtung 11 keine Bewegung bei einer Drehung des zweiten Gehäuseteils 4, dem Drehschemel, gegenüber dem Gehäuse 1 durchführen. Das erfindungsgemäße Drehgelenk ist ölmäßig dicht zur Außenseite, und alle Hohlräume des erfindungsgemäßen Drehgelenks außer der Aufnahmekammer 10 im Drehzentrum können komplett mit Öl gefüllt sein. Somit wird die hydraulische Funktion durch den Einbau der erfindungsgemäßen Drehwinkelmessvorrichtung 11 nicht beeinflusst. Zudem kann diese aus- und eingebaut werden, ohne dass die Gehäusefüllung aus dem erfindungsgemäßen Drehgelenk austritt.

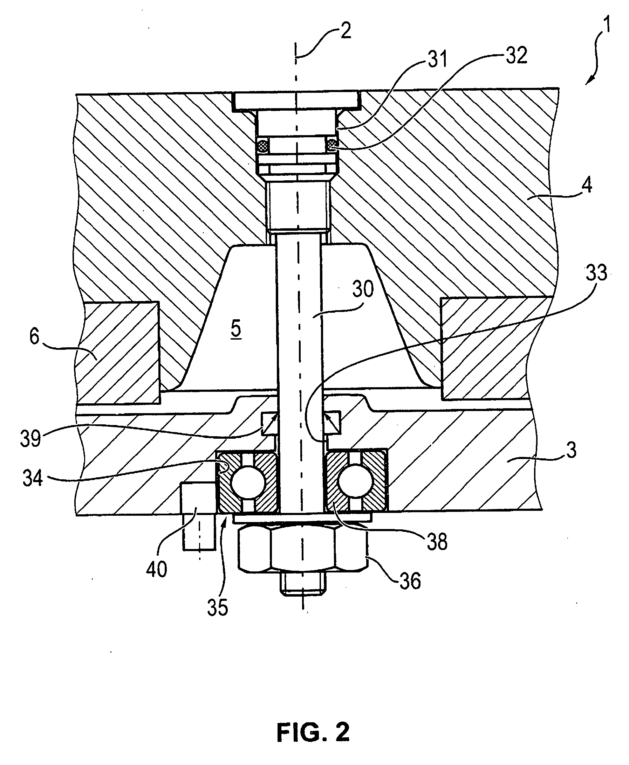

In Fig. 2 ist eine alternative Ausführung des erfindungsgemäßen Drehgelenks dargestellt. Bei der Ausführung gemäß Fig. 1 ist die Aufnahmekammer 10 zur Aufnahme der Drehwinkelmessvorrichtung 11 zwischen den beiden Gehäuseteilen 3, 4 ausgebildet. Gemäß der Ausführung gemäß Fig. 2 ist die Aufnahmekammer 34 im Gehäuseteil 3 des Gehäuses 1 vorhanden. Bei dieser Ausführung weisen das Gehäuseteil 3 und das Gehäuseteil 4, das dem Drehschemel entspricht, eine Lagerachse 30 im Drehzentrum koaxial zur Drehachse 2 auf. Diese Lagerachse 30 ist im Gehäuseteil 4 eingesetzt und ist mit diesem drehfest verbunden. Zur Abdichtung weist die Lagerachse 30 endseitig einen Zylinderabschnitt 31 auf, in dessen Umfang eine Umfangsnut zur Aufnahme eines Dichtungsrings 32, insbesondere eines O-Rings, angeordnet ist. Dieser Dichtring 32 dient zur Abdichtung eines Spaltes zwischen der Lagerachse 30 und dem Gehäuseteil 4. Die Lagerachse 30 verläuft durch eine Durchgangsbohrung 33 im Gehäuseteil 3. Auf der Lagerachse 30 ist endseitig in einer Aufnahmekammer 34 des Gehäuses 1, und zwar im Gehäuseteil 3 ein Drehlager 35 angeordnet. Mittels einer Überwurfmutter 36, die auf ein endseitiges Außengewinde der Lagerachse 30 aufgeschraubt ist, wird die Lagerachse 30 gegen einen inneren Lagerring 38 des Drehlagers 35 verspannt. Die Aufnahmekammer 34 ist gegen den Gehäuseinnenraum 5, der mit Hydrauliköl gefüllt ist, über eine in der Durchgangsbohrung 33 in deren Innenwandung angeordnete Umfangsdichtung 39 abgedichtet, indem die Umfangsdichtung 39 einen Spalt zwischen der Lagerachse 30 und der Durchgangsbohrung 33 ausfüllt. Alternativ kann die Umfangsdichtung 39 auch in einer Innennut in der Innenwandung der Durchgangsbohrung 33 angeordnet sein. Die Umfangsdichtung 39 ist insbesondere als O-Ring-Dichtung ausgebildet. In dem erfindungsgemäßen Drehlager 35 ist ein Messsystem integriert, mit dem z. B. die Drehrichtung, die Drehzahl, die Messposition und der Drehwinkel gemessen werden können. Hierbei kann es sich z. B. um ein Wälzlager handeln, in dem ein hochauflösender Encoder integriert ist. Ein derartiges erfindungsgemäßes Lager ermöglicht z. B. eine Winkelauflösung unter 1/10 Winkelgrad. Seitlich am Drehlager 35 ist eine elektrische Anschlussbuchse 40 angeordnet, an die eine Messleitung anschließbar ist. Diese Ausbildung einer Drehwinkelmessvorrichtung 11 zeichnet sich durch eine sehr kompakte Bauform und eine einfache und kostengünstige Konstruktion aus, wobei gleichzeitig eine Drehwinkelmessung mit hoher Präzision möglich ist.

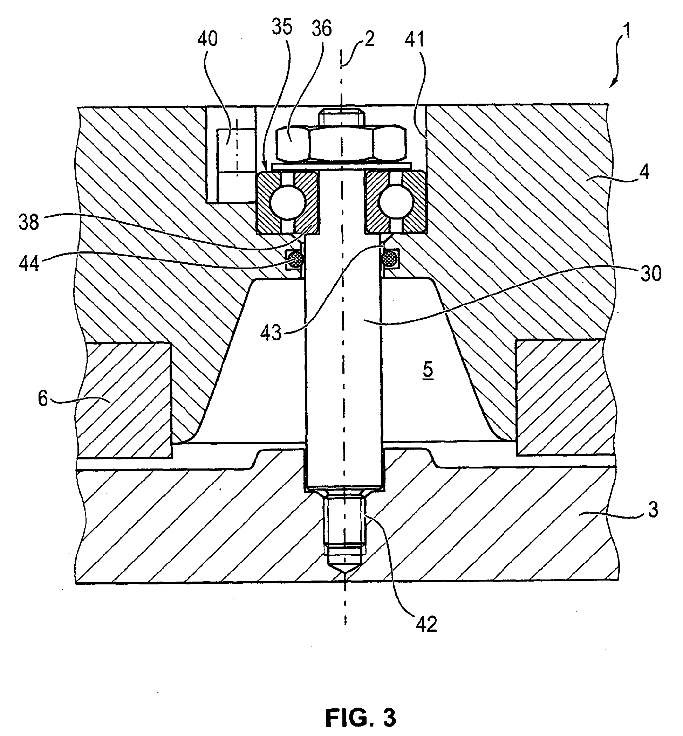

In Fig. 3 ist eine alternative Ausbildung zu Fig. 2 dargestellt, bei der das Drehlager 33 mit dem integrierten Messsystem in einer zur Gehäuseseite offenen Aufnahmekammer 41 des Gehäuses 1 angeordnet ist, wobei die Aufnahmekammer 41 im Gehäuseteil 4, dem Drehschemel, vorhanden ist. Die Lagerachse 30 ist einendig in eine Sacklochbohrung 42 im Gehäuseteil 3 eingesetzt, z. B. eingeschraubt. Dies hat den Vorteil, dass eine Abdichtung zwischen dem Gehäuseinnenraum 5 und der Außenseite des Gehäuseteils 3 nicht erforderlich ist. Hierdurch entfällt eine Dichtstelle. Die Lagerachse 30 verläuft durch eine Durchgangsbohrung 43 des Gehäuseteils 3, die in der Aufnahmekammer 41 endet. Die Lagerachse 30 ist endseitig in dem Drehlager 33 gelagert und die Überwurfmutter 36 ist am Achsenende auf dem Außengewinde aufgeschraubt und liegt gegen den Lagerinnenring 38 an. Die Lagerachse 30 ist hierdurch mit dem Gehäuse 1 verbunden. Die Abdichtung der Aufnahmekammer 41 gegenüber dem Gehäuseinnenraum 5 erfolgt über eine in der Durchgangsbohrung 43 angeordnete, die Lagerachse 30 umfangsgemäß abdichtende Umfangsdichtung 44, insbesondere einer O-Ring-Dichtung. Die O-Ring-Dichtung kann einerseits in einer Innennut der Durchgangsbohrung 42 oder einer Außennut der Lagerachse 30 angeordnet sein. Auch diese Ausbildung der Drehwinkelmessvorrichtung 11 zeichnet sich durch eine sehr kompakte Bauform aus und eine einfache und kostengünstige Konstruktion und bietet den Vorteil, dass nur eine einzige Dichtstelle zur Abdichtung des Gehäuseinnenraums 5 nach außen erforderlich ist.

Auch die Ausführungen gemäß Fig. 2 und 3 haben die Vorteile, wie zu der Ausführungsform gemäß Fig. 1 beschrieben.

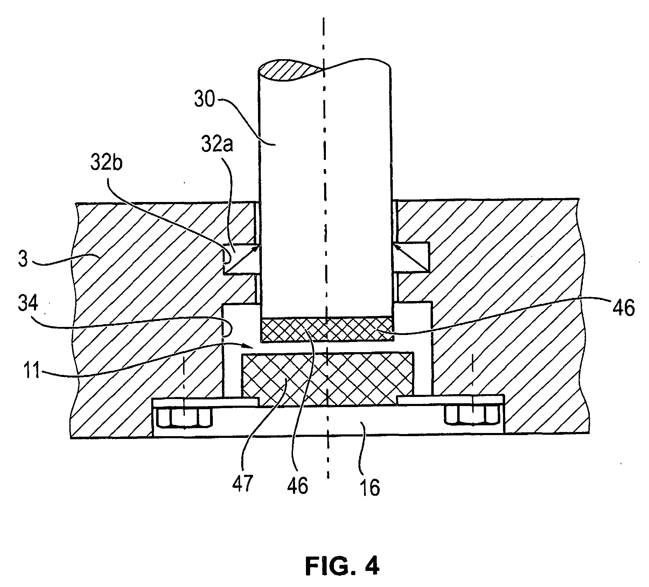

In Fig. 4 ist eine weitere erfindungsgemäße Ausführung dargestellt. Hierbei ist die Aufnahmekammer 34 im Gehäuseteil 3 des Gehäuses 1 ausgebildet. Das Gehäuseteil 3 und das den Drehschemel 4 bildende Gehäuseteil 4 weisen die Lagerachse 30 auf. Diese Lagerachse 30 ist im Gehäuseteil 4 verschraubt, so dasssie mit diesem drehfest verbunden ist. Zur Abdichtung eines Spaltes zwischen der Lagerachse 30 und dem Gehäuseteil 4 ist in einer Durchgangsbohrung des Gehäuseteils 4 eine Umfangsdichtung 32a in einer Innennut 32b um die Lagerachse 30 herum angeordnet. In der Aufnahmekammer 34 befindet sich ein Magnet-Sensorsystem als Drehwinkelmessvorrichtung 11. Dieses besteht aus einem Magneten 46 auf der Stirnseite der Lagerachse 30, der mit einem auf den Wechsel des Magnetfeldes des Magneten 46 ansprechenden Sensor 47 zusammenwirkt, der auf einer die Aufnahmekammer 34 verschließenden Halteplatte 47 dem Magneten 46 gegenüberliegend positioniert ist. Auch bei dieser Ausführungsform werden die Vorteile, wie zur Ausführungsform gemäß Fig. 1 beschrieben, verwirklicht.

Die Erfindung ist nicht auf die dargestellten und beschriebenen Ausführungsbeispiele beschränkt, sondern umfasst auch alle im Sinne der Erfindung gleichwirkenden Ausführungen. Ferner ist die Erfindung bislang auch noch nicht auf die im jeweiligen unabhängigen Anspruch definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des jeweiligen unabhängigen Anspruchs weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

## Patentansprüche

1. Drehgelenk, insbesondere zur gelenkigen Verbindung eines Vorderwagens und eines Hinterwagens eines Omnibusses, bestehend aus einem Gehäuse (1), das in einer zu einer Drehachse (2) des Gelenks senkrechten Ebene in zwei Gehäuseteile (3, 4) unterteilt ist, wobei die beiden Gehäuseteile (3, 4) gegeneinander um die Drehachse (2) verdrehbar und abgedichtet gegen einen Austritt von in einem Gehäuseinnenraum (5) befindlicher Hydraulikflüssigkeit miteinander verbunden sind, und wobei in dem ersten Gehäuseteil (3) ein Zahnrad (6) eines Zahnstangenantriebs eines Schwingungsdämpfers drehbar gelagert ist, und das zweite Gehäuseteil (4) ein Antriebselement bildet und mit dem Zahnrad (6) drehfest verbunden ist,
**dadurch gekennzeichnet, dass** koaxial zur Drehachse im Drehzentrum des Drehgelenks innerhalb des Gehäuses (1) in einer Aufnahmekammer (10) eine Drehwinkelmessvorrichtung (11) angeordnet ist und mit dem zweiten Gehäuseteil (4) zur Messung des Drehwinkels zusammenwirkt, und die Aufnahmekammer (10) gegen einen Eintritt der Hydraulikflüssigkeit abgedichtet ist.

2. Drehgelenk nach Anspruch 1,
**dadurch gekennzeichnet, dass** die Aufnahmekammer (10) innerhalb der beiden Gehäuseteile (3, 4) angeordnet ist, so dass die Drehwinkelmessvorrichtung (11) im Gehäuse (1) vollständig integriert ist.

3. Drehgelenk nach Anspruch 1 oder 2,
**dadurch gekennzeichnet, dass** die Drehwinkelmessvorrichtung (11) aus einem Drehpotentiometer (12) besteht, das mit seiner Drehwelle (13) über einen Mitnehmer (14) mit dem zweiten Gehäuseteil (4) verbunden ist.

4. Drehgelenk nach Anspruch 1 oder 2,
**dadurch gekennzeichnet, dass** die Drehwinkelmessvorrichtung (11) aus einem optischen, induktiven oder Magnetfeld Messsystem besteht.

5. Drehgelenk nach einem der Ansprüche 1 bis 4,
**dadurch gekennzeichnet, dass** die Drehwinkelmessvorrichtung (11) auf einer Halteplatte (16) positioniert ist, mit der die Aufnahmekammer (10) einseitig verschlossen ist, wobei die Halteplatte (16) insbesondere auf einer Außenseite (17) des ersten Gehäuseteils (3) befestigt ist.

6. Drehgelenk nach Anspruch 3 oder 5,
**dadurch gekennzeichnet, dass** der Mitnehmer (14) in einer zur Drehachse (2) koaxialen Durchgangsöffnung (18) des zweiten Gehäuseteils (4) dichtend angeordnet ist und über Schrauben (15) mit dem zweiten Gehäuseteil (4) lösbar verbunden ist.

7. Drehgelenk nach Anspruch 6,
**dadurch gekennzeichnet, dass** der Mitnehmer (14) in der Durchgangsöffnung (18) gegenüber einer Außenfläche (20) des zweiten Gehäuseteils (4) nach innen versetzt angeordnet ist, und die Durchgangsöffnung (18) oberhalb des Mitnehmers (14) durch eine Abdeckung (21) staubdicht verschlossen ist.

8. Drehgelenk nach einem der Ansprüche 1 bis 7,
**dadurch gekennzeichnet, dass** koaxial zur Drehachse (2) das erste Gehäuseteil (3) zur Bildung der Aufnahmekammer (10) einen hohlzylindrischen Ansatz (22) besitzt, der durch eine Innenbohrung (23) des im Gehäuse (1) gelagerten Zahnrades (6) verläuft und mittels Dichtungen (24) gegenüber dem Zahnrad (6) abgedichtet ist.

9. Drehgelenk nach einem der Ansprüche 1 bis 8,
**dadurch gekennzeichnet, dass** koaxial zur Drehachse (2) im zweiten Gehäuseteil (4) an dessen dem ersten Gehäuseteil (3) zugekehrten Seite eine Ausnehmung (25) ausgebildet ist, in die der hohlzylindrische Ansatz (22) endseitig hineinragt.

10. Drehgelenk nach Anspruch 1,
**dadurch gekennzeichnet, dass** die Aufnahmekammer (10, 41) für die Drehwinkelmessvorrichtung (11) in einem der Gehäuseteile (3, 4) ausgebildet ist und die Drehwinkelmessvorrichtung (11) aus einem Drehlager (35) mit integriertem Drehwinkelmesssystem besteht.

11. Drehgelenk nach Anspruch 5,
**dadurch gekennzeichnet, dass** an der Stirnseite einer Lagerachse (30), die in der Aufnahmekammer (10) endet, ein Magnet (46) und diesem gegenüberliegend eine Sensoranordnung (47) auf der Halteplatte (16) angeordnet ist.

12. Drehgelenk nach Anspruch 10,
**dadurch gekennzeichnet, dass** das Drehlager (35) endseitig auf einer Lagerachse (30) angeordnet ist, die durch das Drehzentrum (2) des Drehgelenks verläuft.

13. Drehgelenk nach Anspruch 11 oder 12,
**dadurch gekennzeichnet, dass** die Lagerachse (30) innerhalb des Gehäuseteils (3) und/oder des Gehäuseteils (4) mittels einer Umfangsdichtung (32, 39, 44) umfangsgemäß abgedichtet ist.

14. Drehgelenk nach einem der Ansprüche 10 bis 13,
**dadurch gekennzeichnet, dass** die Aufnahmekammer (34, 41) zur Gehäuseaußenseite offen ist.

## Claims

1. Rotary joint, in particular for the articulated connection of a front part and of a rear part of a bus, consisting of a housing (1) which is divided into two housing parts (3, 4) in a plane perpendicular to an axis of rotation (2) of the joint, the two housing parts (3, 4) being rotatable about the axis of rotation (2) in relation to each other and being connected to each other in a manner sealed against an egress of hydraulic fluid located in a housing interior (5), and a pinion (6) of a rack and pinion drive of a vibration damper being mounted rotatably in the first housing part (3), and the second housing part (4) forming a drive element and being connected to the pinion (6) for conjoint rotation,
**characterised in that** an angle of rotation measuring device (11) is arranged in a receiving chamber (10) within the housing (1) in a manner coaxial with respect to the axis of rotation in the rotary centre of the rotary joint and interacts with the second housing part (4) for measuring the angle of rotation, and the receiving chamber (10) is sealed off against an ingress of the hydraulic fluid.

2. Rotary joint according to claim 1,
**characterised in that** the receiving chamber (10) is arranged within the two housing parts (3, 4), so that the angle of rotation measuring device (11) is completely integrated in the housing (1).

3. Rotary joint according to claim 1 or 2,
**characterised in that** the angle of rotation measuring device (11) consists of a rotary potentiometer (12) which is connected by its rotary shaft (13) to the second housing part (4) via a driver (14).

4. Rotary joint according to claim 1 or 2,
**characterised in that** the angle of rotation measuring device (11) consists of an optical, inductive or magnetic field measuring system.

5. Rotary joint according to one of claims 1 to 4,
**characterised in that** the angle of rotation measuring device (11) is positioned on a retaining plate (16), by which the receiving chamber (10) is closed on one side, the retaining plate (16) being fastened in particular to an outer side (17) of the first housing part (3).

6. Rotary joint according to claim 3 or 5,
**characterised in that** the driver (14) is arranged sealingly in a through-opening (18) of the second housing part (4) coaxial with respect to the axis of rotation (2) and is detachably connected to the second housing part (4) via screws (15).

7. Rotary joint according to claim 6,
**characterised in that** the driver (14) is arranged in the through-opening (18) in a manner offset inwards with respect to an outer surface (20) of the second housing part (4), and the through-opening (18) is closed dust-tightly above the driver (14) by a cover (21).

8. Rotary joint according to one of claims 1 to 7,
**characterised in that** the first housing part (3) has a hollow-cylindrical projection (22) coaxially with respect to the axis of rotation (2) for forming the receiving chamber (10), which projection runs through an inner bore (23) of the pinion (6) mounted in the housing (1) and is sealed in relation to the pinion (6) by means of seals (24).

9. Rotary joint according to one of claims 1 to 8,
**characterised in that** a recess (25) is formed coaxially with respect to the axis of rotation (2) in the second housing part (4) on the side of the latter facing the first housing part (3), into which recess the hollow-cylindrical projection (22) projects at the end side.

10. Rotary joint according to claim 1,
**characterised in that** the receiving chamber (10, 41) for the angle of rotation measuring device (11) is formed in one of the housing parts (3, 4) and the angle of rotation measuring device (11) consists of a rotary bearing (35) with integrated angle of rotation measuring system.

11. Rotary joint according to claim 5,
**characterised in that**, at the end side of a bearing shaft (30) which ends in the receiving chamber (10), there is arranged a magnet (46) and opposite the latter a sensor arrangement (47) on the retaining plate (16).

12. Rotary joint according to claim 10,
**characterised in that** the rotary bearing (35) is arranged at the end side on a bearing shaft (30) which runs through the rotary centre (2) of the rotary joint.

13. Rotary joint according to claim 11 or 12,
**characterised in that** the bearing shaft (30) is circumferentially sealed within the housing part (3) and/or the housing part (4) by means of a circumferential seal (32, 39, 44).

14. Rotary joint according to one of claims 10 to 13,
**characterised in that** the receiving chamber (34, 41) is open towards the housing outer side.

## Revendications

1. Articulation rotative, en particulier pour la liaison articulée d'une voiture avant et d'une voiture arrière d'un omnibus, se composant d'un boîtier (1) qui est divisé dans un plan perpendiculaire à un axe de rotation (2) de l'articulation en deux parties de boîtier (3, 4), les deux parties de boîtier (3, 4) étant reliées ensemble de manière rotative l'une contre l'autre autour de l'axe de rotation (2) et de manière étanche contre une sortie de liquide hydraulique se trouvant dans un espace intérieur de boîtier (5), et dans laquelle une roue dentée (6) d'un entraînement par crémaillère d'un amortisseur de vibrations est logée de manière rotative dans la première partie de boîtier (3), et la seconde partie de boîtier (4) forme un élément d'entraînement et est reliée de manière à résister à la rotation à la roue dentée (6), **caractérisée en ce qu'**un dispositif de mesure d'angle de rotation (11) est agencé coaxialement à l'axe de rotation dans le centre de rotation de l'articulation rotative dans le boîtier (1) dans une chambre de réception (10) et coagit avec la seconde partie de boîtier (4) pour la mesure de l'angle de rotation, et la chambre de réception (10) est rendue étanche contre une entrée du liquide hydraulique.

2. Articulation rotative selon la revendication 1,
**caractérisée en ce que** la chambre de réception (10) est agencée dans les deux parties de boîtier (3, 4), de sorte que le dispositif de mesure d'angle de rotation (11) soit complètement intégré dans le boîtier (1).

3. Articulation rotative selon la revendication 1 ou 2,
**caractérisée en ce que** le dispositif de mesure d'angle de rotation (11) se compose d'un potentiomètre rotatif (12) qui est relié avec son arbre de rotation (13) par un entraîneur (14) à la seconde partie de boîtier (4).

4. Articulation rotative selon la revendication 1 ou 2,
**caractérisée en ce que** le dispositif de mesure d'angle de rotation (11) se compose d'un système de mesure optique, inductif ou à champ magnétique.

5. Articulation rotative selon l'une quelconque des revendications 1 à 4,
**caractérisée en ce que** le dispositif de mesure d'angle de rotation (11) est positionné sur une plaque de retenue (16), au moyen de laquelle la chambre de réception (10) est fermée d'un côté, dans laquelle la plaque de retenue (16) est fixée en particulier sur un côté extérieur (17) de la première partie de boîtier (3).

6. Articulation rotative selon la revendication 3 ou 5,
**caractérisée en ce que** l'entraîneur (14) est agencé de manière étanche dans une ouverture débouchante (18) coaxiale à l'axe de rotation (2) de la seconde partie de boîtier (4) et est relié de manière détachable par des vis (15) à la seconde partie de boîtier (4).

7. Articulation rotative selon la revendication 6,
**caractérisée en ce que** l'entraîneur (14) est agencé en déport vers l'intérieur dans l'ouverture débouchante (18) par rapport à une surface extérieure (20) de la seconde partie de boîtier (4) et l'ouverture débouchante (18) est fermée de manière étanche à la poussière au-dessus de l'entraîneur (14) par un recouvrement (21).

8. Articulation rotative selon l'une quelconque des revendications 1 à 7,
**caractérisée en ce que** la première partie de boîtier (3) possède coaxialement à l'axe de rotation (2) pour la formation de la chambre de réception (10) une saillie cylindrique creuse (22) qui s'étend par un perçage intérieur (23) de la roue dentée (6) logée dans le boîtier (1) et est rendu étanche à l'aide de garnitures (24) par rapport à la roue dentée (6).

9. Articulation rotative selon l'une quelconque des revendications 1 à 8,
**caractérisée en ce qu'**un évidement (25) est réalisé coaxialement à l'axe de rotation (2) dans la seconde partie de boîtier (4) sur son côté tourné vers la première partie de boîtier (3), évidement dans lequel la saillie cylindrique creuse (22) pénètre côté extrémité.

10. Articulation rotative selon la revendication 1,
**caractérisée en ce que** la chambre de réception (10, 41) pour le dispositif de mesure d'angle de rotation (11) est réalisée dans l'une des parties de boîtier (3, 4) et le dispositif de mesure d'angle de rotation (11) se compose d'un palier rotatif (35) avec système de mesure d'angle de rotation intégré.

11. Articulation rotative selon la revendication 5,
**caractérisée en ce qu'**un aimant (46) et en face de celui-ci un agencement de capteur (47) sont agencés sur la plaque de retenue (16) sur le côté avant d'un axe de palier (30) qui se termine dans la chambre de réception (10).

12. Articulation rotative selon la revendication 10,
**caractérisée en ce que** le palier rotatif (35) est agencé côté extrémité sur un axe de palier (30) qui s'étend par le centre de rotation (2) de l'articulation rotative.

13. Articulation rotative selon la revendication 11 ou 12,
**caractérisée en ce que** l'axe de palier (30) dans la partie de boîtier (3) et/ou de la partie de boîtier (4) est rendu étanche sur la périphérie à l'aide d'une garniture périphérique (32, 39, 44).

14. Articulation rotative selon l'une quelconque des revendications 10 à 13,
**caractérisée en ce que** la chambre de réception (34, 41) est ouverte vers le côté extérieur du boîtier.
